# EUROPÄISCHE PATENTANMELDUNG

(11) **EP 2 945 046 A1**
(43) Veröffentlichungstag der Anmeldung: **18.11.2015**
(21) Anmeldenummer: 14168355.7
(22) Anmeldetag: 14.05.2014
(51) Int. Cl.: G06F 3/0482, G06F 3/0484, B60K 37/06

(54) **Anwenderschnittstelle und Verfahren zur Einstellung eines Dämpfers eines Fahrzeuges**

(71) Anmelder: Volkswagen Aktiengesellschaft, 38440 Wolfsburg (DE)
(72) Erfinder: Kukla, Stefan, 29339 Wathlingen (DE); Sonnak, Ulrich, 38108 Braunschweig (DE)

(57) **Zusammenfassung**

Es werden eine Anwenderschnittstelle sowie ein Verfahren zum Einstellen eines Dämpfers eines Fahrzeuges vorgeschlagen. Das Verfahren umfasst die Schritte:
- Darstellen einer Schaltfläche zur Anwahl mindestens einer abgespeicherten Fahrwerkseinstellung auf einer Anzeigeeinheit (3),
- Öffnen eines Editiermodus für die Schaltfläche zur Anpassung der abgespeicherten Fahrwerkseinstellung, und
- Betätigen eines Schiebereglers (4) des Editiermodus zur Einstellung des Dämpfers.

## Beschreibung

### Stand der Technik

Die vorliegende Erfindung betrifft eine Anwenderschnittstelle sowie ein Verfahren zur Einstellung einer Dämpferregelung eines Fahrzeuges. Insbesondere betrifft die vorliegende Erfindung eine intuitive und exakt an einen Anwenderwunsch anpassbare Einstellung der Dämpferregelung.

Die Individualisierung von Fahrwerksparametern wird im Automobilbereich seit Langem verfolgt. Beispielsweise werden Fahrwerkseinstellungen mit zwei bis drei unterschiedlichen Programmen zur Dämpferregelung dem Anwender wahlfrei angeboten. So bietet die aktuelle S-Klasse von Mercedes Benz drei unterschiedliche Programme, während der aktuelle Phaeton von Volkswagen mit vier unterschiedlichen Programmen die derzeit meisten Einstellungsmöglichkeiten bereithält. Häufig werden die Dämpfereinstellungen bzw. -programme auch mit den Attributen "Comfort", "Normal" und "Sport" bezeichnet. Eine Unterscheidung gegenüber einer zwischen den beiden vorgenannten Extremwerten gelegenen Einstellung "Normal" ist schwierig und muss zur Darstellung eines kundenorientierten Optimums dichter bei "Comfort" liegen, als dies derzeit umgesetzt ist.

DE 103 34 587 A1 offenbart ein Verfahren und eine Vorrichtung zur fahrerabhängigen Einstellung von Fahrzeugfunktionen, wobei mehrere Funktionscluster definiert und über eine Vielzahl von Schiebereglern in der Mittelkonsole eines Fahrzeuges eingestellt werden können. Eine veränderbare Fahrzeugfunktion, welche innerhalb der Cluster mittels der Schieberegler angepasst wird, ist die Dämpfung des Fahrwerkes.

DE 198 11 244 A1 offenbart eine Einrichtung zur willkürlichen Auswahl zwischen Komfortbetrieb und Economybetrieb eines Kraftfahrzeuges, bei welcher durch eine Stellvorrichtung in Form eines Schiebereglers unterschiedliche Grade zwischen einem Komfort- und einem Economybetrieb ausgewählt werden können.

Die vorgenannten Lösungen können das steigende Anwenderbedürfnis nach Individualisierungsmaßnahmen zur Anpassung eines Verhaltens ihres Fortbewegungsmittels nur bedingt befriedigen. Es ist daher eine Aufgabe der vorliegenden Erfindung, den vorstehend identifizierten Bedarf zu stillen.

### Offenbarung der Erfindung

Die vorstehend genannte Aufgabe wird erfindungsgemäß durch ein Verfahren zur Einstellung einer Dämpferregelung eines Fahrzeuges (z.B. mit vier Verstelldämpfern) gelöst. Der Dämpfer ist Bestandteil des Fahrwerks und lässt das Fahrwerk je nach Einstellung als hart beziehungsweise sportlich oder weich beziehungsweise komfortabel erscheinen. Erfindungsgemäß wird zunächst auf einer Anzeigeeinheit eine Schaltfläche zur Anwahl mindestens einer abgespeicherten Fahrwerkseinstellung dargestellt. Die Schaltfläche kann daher Bestandteil eines Menüs zur Anpassung von Fahrzeugverhaltenskenngrößen sein. Über die Schaltfläche kann beispielsweise eine Vielzahl thematisch miteinander in Verbindung stehender Fahrzeugeinstellungen aktiviert werden. Beispielsweise kann die Fahrwerkseinstellung in Verbindung mit Getriebe- und Gasannahme Verhaltensweisen des Fortbewegungsmittels geändert werden. Auch das Lenkverhalten kann im Rahmen eines über die Schaltfläche aktivierbaren Profils angepasst werden. Anschließend wird ein Editiermodus für die Anpassung der mit der Schaltfläche assoziierten Fahrwerkseinstellungen geöffnet. Mit anderen Worten können die durch die Verwendung der Schaltfläche aktivierten Einstellungen im Editiermodus durch den Anwender angepasst werden. Erfindungsgemäß wird ein Schieberegler im Editiermodus dargestellt und zur Einstellung der Fahrwerksdämpferregelung des Fortbewegungsmittels durch den Anwender betätigt. Der Schieberegler ist insbesondere als linearer "Slider" ausgestaltet. Bei Bewegung des Schiebereglers in eine erste Richtung wird die Dämpferregelung des Fahrwerks weicher beziehungsweise komfortabler eingestellt, während er bei Bewegung in eine entgegengesetzte Richtung härter beziehungsweise sportlicher eingestellt wird. Die Verwendung eines Schiebereglers ermöglicht eine intuitive und leicht quantitativ erfassbare Einstellungsmöglichkeit für die geregelten Fahrwerksdämpfer.

Die Unteransprüche zeigen bevorzugte Weiterbildungen der Erfindung.

Bevor der Schieberegler in einer betätigbaren Version zur Einstellung der Dämpferregelung dargestellt wird, kann eine verkleinerte, nicht-editierbare Darstellung des Schiebereglers in einem Übersichtsmenü des Editiermodus angezeigt werden. Dabei kann der Schieberegler bereits eine aktuelle Stellung des Schiebeelements aufweisen, um dem Anwender eine Vorab-Orientierung zur aktuellen Einstellung zu gewähren, ohne dass dieser eine (versehentliche) Veränderung an der aktuellen Einstellung vornehmen kann. Dies bietet dem Anwender einer Orientierung zu den im Rahmen der Schaltfläche vordefinierbaren Einstellungen.

Bevorzugt kann die Schaltfläche Bestandteil einer Vielzahl von Schaltflächen sein, mittels welcher eine wahlfreie Anpassung des Betriebsverhaltens des Fortbewegungsmittels vorgenommen werden kann. Nicht alle Schaltflächen müssen editierbar ausgeführt sein. Eine Vielzahl der Schaltflächen kann als nicht-editierbare Schaltflächen zum ausschließlichen Abruf von Werkseinstellungen für unterschiedliche Anwenderprofile vorgesehen sein. Auf diese Weise können die Vielzahl nicht-editierbarer Schaltflächen durch voreingestellte Bezeichnungen und optische Erscheinungen (beispielsweise durch die Verwendung von Sinnbildern, englisch "Icons") intuitiv verwendbar gestaltet sein und auch für Anwender mit verringertem Individualisierungsbedarf geeignete Einstellmöglichkeiten bereitstellen, während die erfindungsgemäß individualisierbare Schaltfläche ein exakt und intuitiv editierbares Ensemble von Fahrzeugeinstellungen bereithält.

Bevorzug kann der Schieberegler stufenlos ausgestaltet sein. Mit anderen Worten sind mit bloßem Auge keine vordefinierten Stufen als Raststufe des Schiebereglers vorgesehen. Einerseits wird somit eine möglichst Hardware-analoge Darstellung ermöglicht, andererseits wird dem Individualisierungsbedürfnis des Anwenders entsprochen, welcher eine möglichst geringe Wahrscheinlichkeit seiner Einstellung mit den Einstellungen anderer Anwender wünscht.

Eine Stellung des Schiebereglers kann indes softwareseitig einem diskreten Wert für die Fahrwerkseinstellung zugeordnet werden. Mit anderen Worten werden benachbarte mögliche Stellungen des Schiebereglers einem gemeinsamen, identischen Wert zugeordnet, welcher zur Fahrwerkseinstellung der Dämpferregelung verwendet wird. Bei einer geeigneten Wahl für die Anzahl unterschiedlicher Fahrwerkseinstellungen ist der Anwender jedoch nicht in der Lage, die Diskretisierung der möglichen Werte zu erfahren, sodass eine vereinfachte Signalübertragung in Verbindung mit dem Wunsch nach größtmöglicher Individualisierung realisiert werden kann.

Bevorzug kann zwischen der Stellung des Schiebereglers und der tatsächlichen Einstellung des Dämpfers ein nichtlinearer Zusammenhang definiert werden. Insbesondere kann eine als "normal" bezeichnete Position des Reglers einen solchen Wert für die Fahrwerkseinstellung erzeugen, welcher näher an einem der "Comfort"-Einstellung entsprechendem Wert liegt als an einem der "Sport"-Einstellung entsprechenden Wert. Ein solcher nichtlinearer Zusammenhang befriedigt die Erwartungshaltung des Anwenders besser, als ein der optischen Darstellung entsprechender technischer Zusammenhang mit den korrespondierenden Fahrwerkseinstellungen.

Um eine automatische, fahrsituationsspezifische Anpassung von Fahrwerksparametern weiterhin zu ermöglichen, kann die Stellung des Schiebereglers stets eine obere und eine untere Grenze eines dynamischen Anpassungsbereiches der Einstellung des Dämpfers bewirken. Mit anderen Worten werden Dämpfereinstellungsbereiche definiert, welche einer jeweiligen Stellung des Schiebereglers zugeordnet sind. Im Ansprechen auf das Erkennen einer bestimmten Fahrsituation (z. B. rasante Kurvenfahrt, Fahrt über eine unebene Straßenoberfläche wie z. B. Kopfsteinpflaster) kann innerhalb der so definierten Grenzen eine adäquate Anpassung von Fahrwerksparametern ohne eine zusätzliche Anwenderinteraktion vorgenommen werden. Selbstverständlich liegt eine erste Grenze einer sportlichen Einstellung des Schiebereglers in einem härteren Dämpferbereich als eine entsprechende erste Grenze einer komfortableren Reglerstellung. Selbiges gilt für die jeweilige zweite (untere) Grenze der vordefinierten Regelbereiche.

Der Wert für die Fahrwerkseinstellung der Dämpferregelung kann beispielsweise mittels einer Bus-Nachricht (CAN-Nachricht) in Abhängigkeit der Reglerstellung versendet werden. Bevorzugt können mindestens fünf, äußerste bevorzugt mindestens zehn unterschiedliche Dämpfereinstellungen durch die Bus-Nachricht transportiert werden. Ein Beispiel für eine geeignete (technische) Auflösung unterschiedlicher Schiebereglerstellungen ist die Verwendung von 14 oder 15 unterschiedlichen Werten für die Dämpfereinstellung. Diese Anzahl stellt einen geeigneten Kompromiss zwischen dem erforderlichen Signalisierungsaufwand und dem erzeugten Anwendererlebnis dar.

Der Schieberegler kann beispielsweise durch eine Anwendergeste betätigt werden. Berührungsempfindliche Oberflächen auf Anzeigeelementen haben sich in diesem Zusammenhang bereits jahrelang bewährt. Eine neue und erfindungsgemäß in geeigneter Weise verwendbare Möglichkeit zur Verstellung des erfindungsgemäßen Schiebereglers ist die Erkennung einer frei im Raum ausgeführten Geste (3D-Geste) eines Anwenders, welche beispielsweise im Kontext eines auf der Anzeigeeinheit dargestellten Schiebereglers ausgeführt wird. Führt der Anwender seine Hand in Richtung sportlicherer Einstellungen des Schiebereglers, können entsprechend sportliche Werte an das Fahrwerk kommuniziert werden und der Schieberegler seine optische Darstellung entsprechend anpassen. Entsprechendes gilt für eine Handbewegung in Richtung komfortablerer Einstellungsbereiche des Schiebereglers. Auf diese Weise wird einerseits eine Bedienung während der Fahrt vereinfacht, da der Schieberegler nicht an einer exakten Position berührt werden muss, andererseits die Anwenderfreude während der Bedienung seines Fahrzeuges gesteigert wird.

Gemäß einem zweiten Aspekt der vorliegenden Erfindung wird eine Anwenderschnittstelle zur Einstellung einer Dämpferregelung eines Fahrzeuges vorgeschlagen. Der Dämpfer kann beispielsweise Bestandteil eines Fahrwerks eines PKW, eines Transporters, eines LKW o.ä. sein. Die Anwenderschnittstelle umfasst eine Anzeigeeinheit zur Wiedergabe einer Schaltfläche zur Anwahl mindestens einer abgespeicherten Fahrwerkseinstellung. Auch einen Schieberegler kann die Anzeigeeinheit bei Anwahl eines Editiermodus' für die Schaltfläche darstellen. Eine Eingabeeinheit ist vorgesehen, die entsprechende Anwendereingabe mit Bezug auf den Schieberegler beziehungsweise die Schaltfläche zu erfassen und in entsprechende Steuerbefehle zur Anpassung der Anzeige umzusetzen. Die Ausgabeeinheit ist eingerichtet, im Ansprechen auf die Betätigung des Schiebereglers eine Einstellung der Dämpferregelung zu verändern. Hierzu kann die Ausgabeeinheit beispielsweise einen Bus-Controller umfassen, welcher einen entsprechenden Wert an ein Fahrwerkssteuergerät sendet. Mit anderen Worten ist die erfindungsgemäße Anwenderschnittstelle eingerichtet, ein Verfahren zur Einstellung einer Dämpferregelung auszuführen, wie es in Verbindung mit dem erstgenannten Erfindungsaspekt im Detail beschrieben worden ist. Die Merkmale, Merkmalskombinationen und die sich aus diesen ergebenden Vorteile entsprechen den in Verbindung mit dem erfindungsgemäßen Verfahren Ausgeführten derart ersichtlich, dass zur Vermeidung von Wiederholungen auf die obigen Ausführungen verwiesen wird.

Gemäß einem dritten Aspekt der vorliegenden Erfindung wird ein Fahrzeug vorgeschlagen, welches ein Fahrwerk mit einem oder mehreren einstellbaren Dämpfern aufweist. Zusätzlich ist eine Anwenderschnittstelle in dem Fahrzeug vorgesehen, wie sie in Verbindung mit dem zweitgenannten Erfindungsaspekt oben beschrieben worden ist. Auch in diesem Zusammenhang wird zu den Merkmalen, Merkmalskombinationen und den sich aus diesen ergebenden Vorteilen auf die obigen Ausführungen verwiesen.

Gemäß einem vierten Erfindungsaspekt wird ein Computerprogrammprodukt (z. B. ein Datenspeicher) vorgeschlagen, auf welchem Instruktionen gespeichert sind, die einen programmierbaren Prozessor in die Lage versetzen, die Schritte eines Verfahrens gemäß dem erstgenannten Erfindungsaspekt durchzuführen. Das Computerprogrammprodukt kann als CD, DVD, Blu-ray-Disc, Flash-Speicher, Festplatte, RAM/ROM. Cache etc. ausgestaltet sein.

Gemäß einem fünften Aspekt der vorliegenden Erfindung wird eine Signalfolge repräsentierend Instruktionen vorgeschlagen, welche einen programmierbaren Prozessor in die Lage versetzen, die Schritte eines Verfahrens gemäß dem erstgenannten Erfindungsaspekt durchzuführen. Auf diese Weise wird auch die informationstechnische Bereitstellung der Instruktionen für den Fall unter Schutz gestellt, dass sich die hierzu erforderlichen Speichermittel außerhalb des Geltungsbereiches der beigefügten Ansprüche befinden.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Übersicht über Komponenten eines Ausführungsbeispiels eines erfindungsgemäßen Fortbewegungsmittels mit einem Ausführungsbeispiel einer erfindungsgemäßen Anwenderschnittstelle;
- Figur 2: eine erste mögliche Bildschirmansicht auf einer Anzeigeeinheit eines Ausführungsbeispiels einer erfindungsgemäßen Anwenderschnittstelle;
- Figur 3: eine zweite mögliche Bildschirmansicht auf einer Anzeigeeinheit eines Ausführungsbeispiels einer erfindungsgemäßen Anwenderschnittstelle;
- Figur 4: eine dritte mögliche Bildschirmansicht auf einer Anzeigeeinheit eines Ausführungsbeispiels einer erfindungsgemäßen Anwenderschnittstelle;
- Figur 5: eine schematische Ansicht zur Veranschaulichung von Zusammenhängen zwischen einer optischen und einer informationstechnischen Reglerstellung; und
- Figur 6: ein Flussdiagramm veranschaulichend Schritte eines Ausführungsbeispiels eines erfindungsgemäßen Verfahrens.

### Ausführungsformen der Erfindung

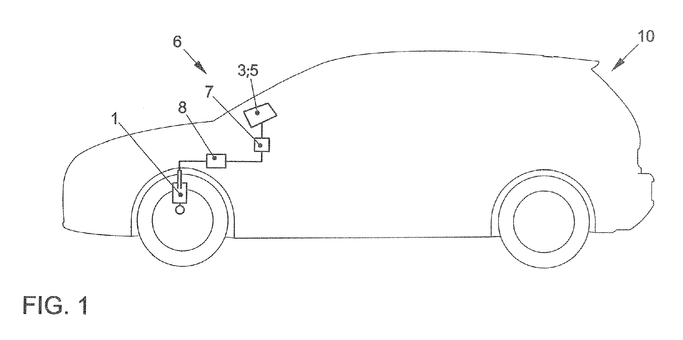

Figur 1 zeigt einen PKW 10 als Fortbewegungsmittel, in welchen eine Anwenderschnittstelle 6 zur Einstellung eines Dämpfers 1 eines Fahrwerks vorgesehen ist. Die Anwenderschnittstelle 6 umfasst einen Bildschirm 3 als Anzeigeeinheit mit einer berührungsempfindlichen Oberfläche 5 als Eingabeeinheit, welcher mit einem elektronischen Steuergerät 7 als Auswerteeinheit informationstechnisch verbunden ist. Das elektronische Steuergerät 7 ist mit einer Ausgabeeinheit 8 verbunden, welche im Ansprechen auf einen mittels eines (nicht dargestellten) Schiebereglers auf dem Bildschirm 3 eine Einstellung des Dämpfers 1 anpasst. Die optische Gestaltung der auf dem Bildschirm 3 anzeigbaren grafischen Benutzeroberfläche wird in Verbindung mit den nachfolgenden Figuren im Detail beschrieben.

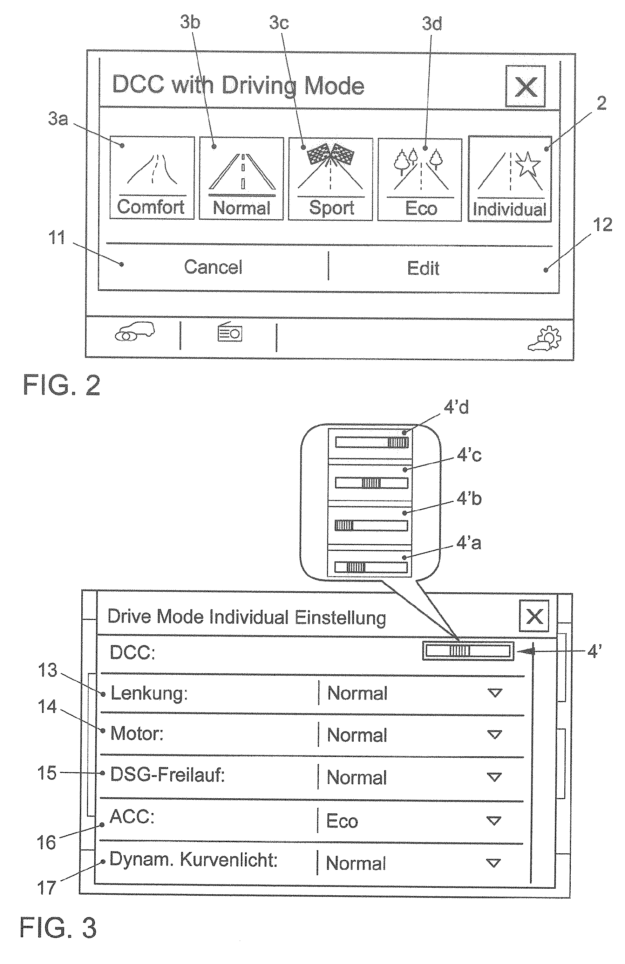

Figur 2 zeigt eine grafische Benutzeroberfläche, welche mehrere Schaltflächen 2, 3a, 3b, 3c, 3d aufweist. Eine erste Schaltfläche 3a repräsentiert eine Komfortorientierte Einstellung, eine zweite Schaltfläche 3b repräsentiert eine normale Einstellung, eine dritte Schaltfläche 3c repräsentiert eine sportliche Einstellung und einer vierte Schaltfläche 3d repräsentiert eine ökologisch günstige Einstellung. Eine fünfte Schaltfläche 2 repräsentiert eine individualisierbare Einstellung, welche über einen ersten Button 12 editierbar ist. Aus dem dargestellten Menü heraus führt ein zweiter Button 11.

Figur 3 zeigt eine grafische Benutzeroberfläche, welche im Ansprechen auf das Betätigen des in Figur 2 dargestellten ersten Buttons 12 zur Anpassung der Individualeinstellung angezeigt wird. In einer obersten Zeile wird eine verkleinerte, nicht-editierbare Darstellung 4' des Schiebereglers 4 dargestellt, um dem Anwender die aktuelle Einstellung des adaptiven Dämpfers zu veranschaulichen. In einer Detailansicht sind in Abhängigkeit anderer Einstellungen anzeigbare Darstellungen 4'a, 4'b, 4'c, 4'd dargestellt. Mit anderen Worten entspricht das Bedienelement des Schiebereglers 4 in der jeweiligen Darstellung, 4', 4'a, 4'b, 4'c, 4'd einer jeweiligen aktuellen Dämpfereinstellung. Unterhalb der Darstellung 4' des Schiebereglers sind die weiteren Einstellparameter Lenkung 13, Motor 14, Getriebe 15, Abstandshalteassistent 16 und Kurvenlicht 17 dargestellt und über sogenannte aufklappbare Listen editierbar.

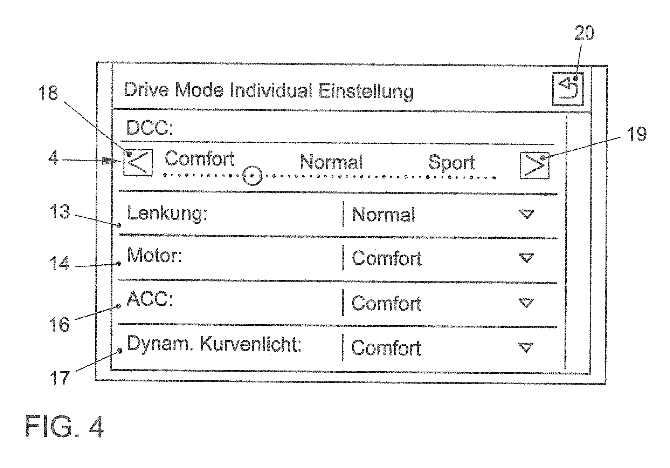

Figur 4 zeigt eine mögliche Ansicht einer grafischen Benutzeroberfläche, nachdem der Anwender die in Figur 3 dargestellte Darstellung 4' des Schiebereglers ausgewählt hat. In einer oberen Zeile wird ein Schieberegler 4 zur stufenlosen Einstellung des Dämpfers zwischen den extremen "Comfort" und "Sport" dargestellt. Optisch mittig ist die Einstellung "Normal" dargestellt. Über links beziehungsweise rechts des Schiebereglers angeordnete Schaltflächen 18, 19 lässt sich die Position des Schiebereglers 4 über Tippgesten zusätzlich stufenweise verstellen.. Über eine Schaltfläche 20 kann der Editiermodus auf Wunsch verlassen werden.

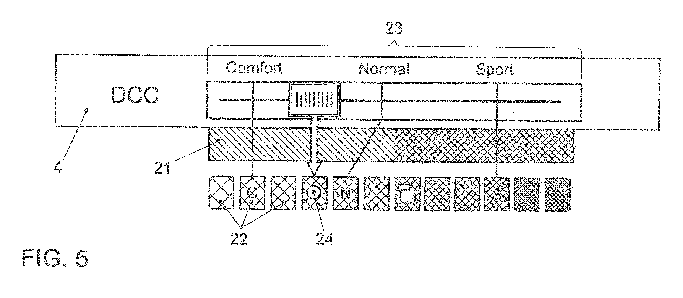

Figur 5 zeigt eine schematische Ansicht zur Veranschaulichung eines nichtlinearen Zusammenhangs zwischen einer aktuellen Stellung eines Schiebereglers 4 und diskreten Stufen 22, welche aus einem kontinuierlich dargestellten balkenförmigen Farbverlauf 21 generiert werden. Während die Einstellung "Normal" optisch mittig zwischen den extremen Einstellungen "Comfort" und "Sport" dargestellt ist, korrespondiert ein die "Normal"-Einstellung repräsentierender Wert "N" mathematisch näher einer "Comfort"-Einstellung (Wert "C"), sodass zwischen der "Normal"-Einstellung und der "Sport"-Einstellung (Wert "S") deutlich mehr Stufen 22 liegen. Zudem ist erwähnenswert, dass die Einstellung "Sport" der rechten Grenze des Regelbereiches 23 weniger nahe liegt als die "Comfort"-Einstellung der linken Grenze des Regelbereiches 23. Eine aktuell eingestellte Stufe 22 wird durch einen Punkt 24 oder direkt durch den Slider markiert, dessen Wert an die Dämpferregelung des Fahrzeugs gesendet wurde.

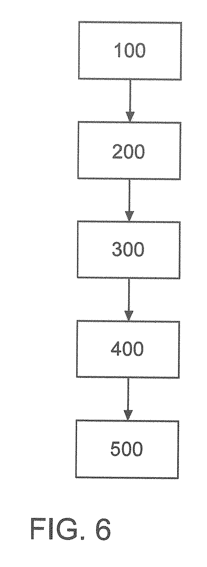

Figur 6 zeigt Schritte eines Ausführungsbeispiels eines erfindungsgemäßen Verfahrens. In Schritt 100 wird eine Vielzahl nicht-editierbarer Schaltflächen und in Schritt 200 eine zusätzliche editierbare Schaltfläche zur Anwahl jeweils mindestens einer abgespeicherten Fahrwerkseinstellung auf einer Anzeigeeinheit dargestellt. Durch das Erkennen einer Anwendereingabe wird in Schritt 300 ein Editiermodus für die in Schritt 200 dargestellte Schaltfläche dargestellt, um die bislang durch den Anwender definierten Fahrwerkseinstellungen erneut anzupassen. Im Ansprechen darauf wird zunächst in Schritt 400 eine verkleinerte, nicht-editierbare Darstellung eines Schiebereglers in einem Übersichtsmenü des Editiermodus angezeigt. Im Ansprechen auf eine weitere Anwendereingabe mit Bezug auf die nicht-editierbare Darstellung des Schiebereglers wird der Schieberegler in einer editierbaren Varianten dargestellt. Diese Variante kann insbesondere größer sein als die nicht-editierbare Darstellung. In Schritt 500 wird der Schieberegler durch den Anwender zur Einstellung des Dämpfers betätigt. Hierzu führt der Anwender eine 3D-Geste in einem Erfassungsbereich einer Eingabeeinheit der erfindungsgemäßen Anwenderschnittstelle aus.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Dämpfer
- 2: Schaltfläche
- 3: Bildschirm
- 3a, 3b, 3c, 3d: nicht-editierbare Schaltflächen
- 4: Schieberegler
- 4', 4'a, 4'b, 4'c, 4'd: verkleinerte Darstellung des Schiebereglers
- 5: berührungsempfindliche Oberfläche
- 6: Anwenderschnittstelle
- 7: elektronisches Steuergerät
- 8: Ausgabeeinheit
- 10: PKW
- 11, 12: Schaltflächen
- 13: Lenkungseinstellung
- 14: Motoreinstellung
- 15: Getriebeeinstellung
- 16: Abstandshalteassistenteinstellung
- 17: Kurvenlichteinstellung
- 18, 19, 20: Schaltflächen
- 21: balkenförmiger kontinuierlicher Farbverlauf
- 22: Stufen
- 23: Regelbereich
- 24: aktuelle Einstellung (Punkt)
- 100 bis 500: Verfahrensschritte

## Patentansprüche

1. Verfahren zur Einstellung einer Dämpferregelung (1) eines Fahrzeugs (10) umfassend die Schritte:
- Darstellen (200) einer Schaltfläche (2) zur Anwahl mindestens einer abgespeicherten Fahrwerkseinstellung auf einer Anzeigeeinheit (3),
- Öffnen (300) eines Editiermodus für die Schaltfläche (2) zur Anpassung der abgespeicherten Fahrwerkseinstellung, und
- Betätigen (500) eines Schiebereglers (4) des Editiermodus zur Einstellung des Dämpfers (1).

2. Verfahren nach Anspruch 1 weiter umfassend
- Anzeigen (400) einer verkleinerten, nicht-editierbaren Darstellung (4') des Schiebereglers (4) in einem Übersichtsmenü des Editiermodus.

3. Verfahren nach Anspruch 1 oder 2 weiter umfassend
- Darstellen (100) einer Vielzahl nicht editierbarer Schaltflächen (3a, 3b, 3c, 3d) zur Anwahl mindestens einer abgespeicherten Fahrwerkseinstellung auf einer Anzeigeeinheit (3).

4. Verfahren nach einem der vorstehenden Ansprüche, wobei der Schieberegler (4) stufenlos ist.

5. Verfahren nach einem der vorstehenden Ansprüche, wobei eine Stellung des Schiebereglers (4) diskretisiert einem Wert für die Fahrwerkseinstellung zugeordnet wird.

6. Verfahren nach Anspruch 5, wobei zwischen der Stellung des Schiebereglers (4) und der Einstellung des Dämpfers (1) ein nichtlinearer Zusammenhang besteht.

7. Verfahren nach einem der vorstehenden Ansprüche, wobei eine Stellung eines Schiebereglers (4) eine obere und eine untere Grenze einer dynamischen Anpassung der Einstellung des Dämpfers (1) bewirkt.

8. Verfahren nach einem der vorstehenden Ansprüche, wobei der Wert für die Fahrwerkseinstellung mittels einer Bus-Nachricht, insbesondere einer CAN-Nachricht, versendet wird, welche bevorzugt 14 unterschiedliche Werte () für die Dämpfereinstellung darstellen kann.

9. Verfahren nach einem der vorstehenden Ansprüche, wobei der Schieberegler (4) mittels Gestensteuerung, insbesondere mittels 3D-Geste und/oder mittels einer berührungsempfindlichen Oberfläche (5) der Anzeigeeinheit (3) betätigt wird.

10. Anwenderschnittstelle (6) zur Einstellung eines Dämpfers (1) eines Fahrzeugs (10) umfassend:
- eine Anzeigeeinheit (3),
- eine Eingabeeinheit (5),
- eine Auswerteeinheit (7),
- eine Ausgabeeinheit (8), wobei
- die Anzeigeeinheit (3) eingerichtet ist, eine Schaltfläche (2, 3a, 3b, 3c, 3d) zur Anwahl mindestens einer abgespeicherten Fahrwerkseinstellung darzustellen (200),
- die Auswerteeinheit (7) eingerichtet ist, einen Editiermodus für die Schaltfläche (2) zur Anpassung der abgespeicherten Fahrwerkseinstellung zu öffnen (300),
- die Eingabeeinheit (5) eingerichtet ist, eine Betätigung (500) eines Schiebereglers (4) des Editiermodus zu erfassen, und
- die Ausgabeeinheit (8) eingerichtet ist, im Ansprechen auf die Betätigung (500) des Schiebereglers (4) eine Einstellung des Dämpfers (1) zu verändern.

11. Anwenderschnittstelle nach Anspruch 10, welche weiter eingerichtet ist, ein Verfahren gemäß einem der vorstehenden Ansprüche 1 bis 9 durchzuführen.

12. Fahrzeug umfassend ein Fahrwerk mit einem einstellbaren Dämpfer (1) und eine Anwenderschnittstelle (6) nach einem der Ansprüche 10 oder 11.

13. Computerprogrammprodukt umfassend Instruktionen, welche, wenn Sie auf einer Auswerteeinheit (7) einer Anwenderschnittstelle (8) nach einem der Ansprüche 10 oder 11 ausgeführt werden, die Anwenderschnittstelle (8) veranlassen, die Schritte eines Verfahrens nach einem der Ansprüche 1 bis 9 durchzuführen.

14. Signalfolge repräsentierend Instruktionen, welche, wenn Sie auf einer Auswerteeinheit (7) einer Anwenderschnittstelle (8) nach einem der Ansprüche 10 oder 11 ausgeführt werden, die Anwenderschnittstelle (8) veranlassen, die Schritte eines Verfahrens nach einem der Ansprüche 1 bis 9 durchzuführen.
